# EUROPEAN PATENT SPECIFICATION

(11) **EP 1 829 727 B1**
(45) Date of publication and mention of the grant of the patent: **08.12.2010**
(21) Application number: 07103134.8
(22) Date of filing: 27.02.2007
(51) Int. Cl.: B60K 15/05

(54) **Flap unit for the fuel tank inlet of a motor vehicle**
Klappeneinheit für den Kraftstoffeinfüllstutzen eines Kraftfahrzeuges
Unité d'un volet pour la trappe à carburant de véhicule à moteur

(30) Priority: 01.03.2006 IT TO20060151
(43) Date of publication of application: 05.09.2007
(73) Proprietor: FIAT AUTO S.p.A., 10135 Torino (IT)
(72) Inventor: Tosco, Franco, 10135 Torino (IT); Graziano, Franco, 10051 Avigliana (Torino) (IT)
(74) Representative: Rondano, Davide

(56) References cited:
- EP-A1- 0 736 406
- EP-A1- 0 760 306
- DE-A1- 19 827 194
- FR-A1- 2 800 018
- FR-A1- 2 819 452
- FR-A1- 2 845 646
- US-A- 4 917 404

## Description

The present invention relates to a flap unit for the fuel tank inlet of a motor vehicle, having the features specified in the preamble of Claim 1.

European Patent Application EP-A-0 736 406 which represents the closest prior art and discloses all the features of the preamble of claim 1 and claim 13 discloses a flap unit for the fuel tank inlet of a motor vehicle comprising a main body and a bottom portion intended to sealingly close the free space between the main body and the fuel tank inlet. The main body comprises a stationary part, intended to be fixed to the bodywork of the vehicle, and more precisely to the edge of a special recess provided in the region of the inlet, and a flap articulated to the stationary part. The stationary part and the flap are integrated to form the main body, which may be thus mounted as a single piece on the bodywork of the vehicle. The main body is made of rigid plastic material such as, for example, polypropylene reinforced with glass fibres or mineral fibres, while the bottom part is made of thermoplastic material such as, for example, EPDM or PP/EPDM. The flap unit also comprises an adaptor member, which is separate from the main body and is mounted in the above-mentioned recess before assembly of the main body. The adaptor member is also part of the device for locking the flap, since it forms a guide sleeve for a rod which controls the opening of the flap and is operated by a special servomotor.

Due to the integration of the stationary part and of the flap in a single body to be mounted on the bodywork, the known flap unit discussed above has, however, the drawback that it complicates joining of the main body to the bodywork and centring thereof inside the special recess provided in the region of the tank inlet. Moreover, the fact that the adaptor member is made as a component separate from the main body results in a greater amount of labour required during assembly of the flap unit.

A flap unit for the fuel tank inlet of a motor vehicle according to the preamble of Claim 1 is known from French Patent Application FR-A-2 845 646, from European Patent Application EP-A-0 760 306, from US Patent 4 917 404, as well as from French Patent Application FR-A-2 819 452. All these prior art documents disclose a flap unit for the fuel tank inlet of a motor vehicle comprising a stationary support part intended to be fixed to the bodywork of the vehicle in the region of the tank inlet, a flap-like movable part hinged to the stationary part so as to rotate about an axis of rotation between a closed position and an open position, and a retaining portion integrally formed by the stationary part for retaining the movable part in the closed position.

It is an object of the present invention to provide a flap unit for the fuel tank of a motor vehicle which has a smaller number of components, has smaller overall dimensions and is easier and quicker to mount than the above-mentioned prior art.

This object is fully achieved according to the present invention by means of a flap unit having the features defined in the characterizing part of Claim 1.

Further advantageous features of the invention are specified in the dependent claims.

The features and advantages of the present invention will result from the detailed description which follows, given purely by way of a non-limiting example with reference to the accompanying drawings in which:
Figure 1 is a perspective view which shows the whole flap unit for the fuel tank of a motor vehicle according to the invention, as well as the bodywork portion of the vehicle on which the flap unit has to be mounted;
Figure 2 is a perspective view, on a larger scale, of a retaining portion of the flap unit of Figure 1, according to a first embodiment of the invention;
Figure 3 is a perspective view, on a larger scale, of a retaining portion of the flap unit of Figure 1, according to a second embodiment of the invention;
Figure 4 is a view from above, sectioned along a horizontal cross-sectional plane, of the flap unit according to Figures 1 and 2 (first embodiment of the invention) in the assembled condition on the bodywork;
Figure 5 is a view from above, sectioned along a horizontal cross-sectional plane, of the flap unit according to Figures 1 and 3 (second embodiment of the invention) in the assembled condition on the bodywork; and
Figure 6 is a view from above, sectioned along a horizontal cross-sectional plane, of a flap unit according to a third embodiment of the invention.

In the description and in the claims which follow, terms such as "inner" and "outer", "upper" and "lower", "horizontal" and "vertical" are to be understood as referring to the assembled condition of the flap unit on the vehicle.

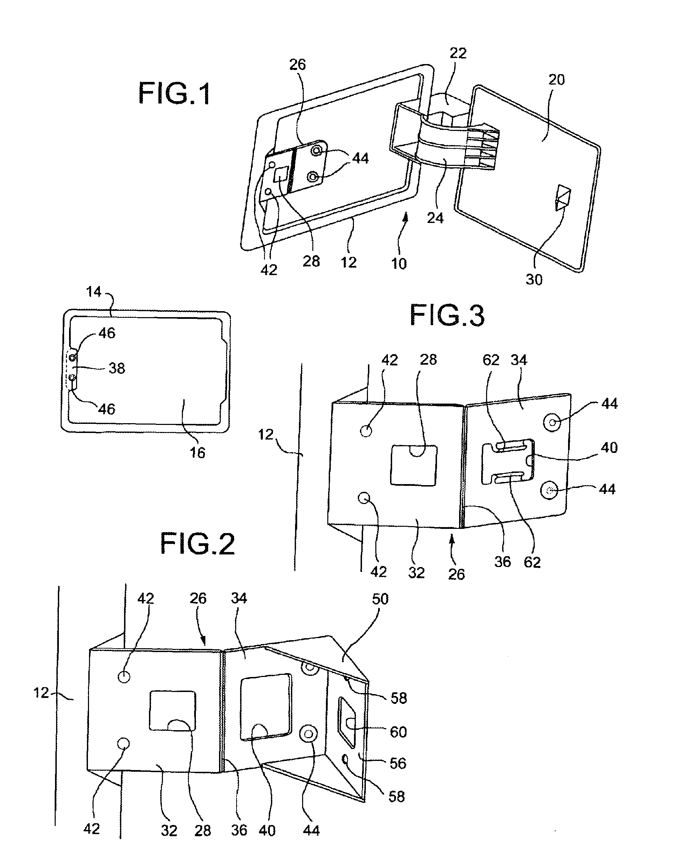

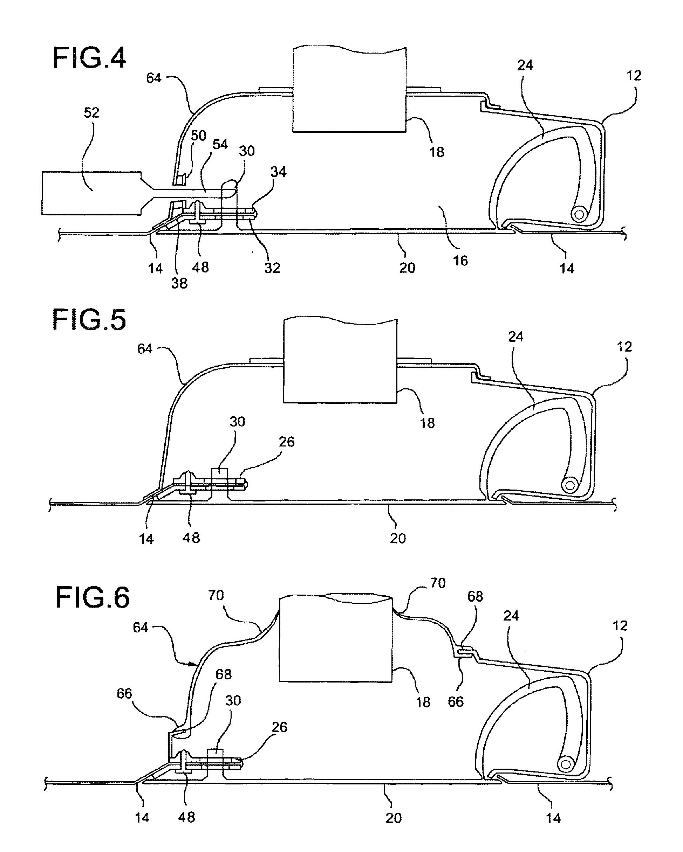

With reference first to Figure 1, a flap unit for the fuel tank of a motor vehicle is generally indicated 10 and comprises a stationary support part 12 intended to be fixed to a bodywork portion 14 of the vehicle, which defines a recess 16 in the region of a fuel tank inlet 18 (shown in Figures 4 to 6) of the vehicle, and a flap-like movable part 20 which is hinged to the stationary part 12 so as to be rotated about a substantially vertical axis between a closed position (shown in Figures 4 to 6), in which it prevents access to the inlet, and an open position (shown in Figure 1), in which it allows access to the inlet for filling with fuel.

More specifically, the stationary part 12 is formed as a frame, which in the examples of embodiment has a rectangular shape, but which may obviously also have a different shape, in particular a circular shape, wherein the shape and size correspond to those of the bodywork portion 14. At one of its longitudinal ends (usually the front end), the stationary part 12 integrally forms a stationary hinge portion 22 which supports and guides a movable hinge portion 24 in the form of a curved arm, which is integrally formed by the flap 20. The stationary part 12 and the flap 20 are therefore integrated to form a single body which can be mounted directly as a whole onto the bodywork portion 14.

Moreover, at the longitudinally opposite end (usually the rear end) the stationary part 12 integrally forms a retaining portion 26 adapted to retain the flap 20 in the closed position. The retaining portion 26 extends from the edge of the stationary part 12 towards the stationary hinge portion 22 and has an opening 28 intended to be passed through by a fastening member 30 provided on the inner side of the flap 20, preferably integrally formed by the flap itself. In greater detail, the retaining portion is formed by two tabs 32 and 34, which are connected to one another by a film-type hinge portion 36 so as to be able to rotate between an initial open position (shown in Figures 1 to 3), in which they are arranged next to one another, and a final assembled position (shown in Figures 4 to 6), in which they sandwich a special projecting lug 38 of the bodywork portion 14.

The tab 32, which is referred to hereinafter as stationary tab, since it is rigidly connected to the stationary part 12 of the flap unit, has the above-mentioned opening 28. Likewise, the tab 34, which is referred to hereinafter as movable tab, since it is capable of rotating with respect to the stationary tab 32, has an opening 40 with shape, size and position such that, in the above-mentioned final assembled position of the retaining portion 26, the openings 28 and 40 of the two tabs 32 and 34 overlap at least partially and project longitudinally towards the inside of the recess 16, beyond the projecting lug 38, so as to allow the fastening member 30 to pass through. Moreover, the two tabs 32 and 34 have, on the opposite side with respect to the film-type hinge 36, respective pairs of through-holes 42 and 44 which are suitably arranged so as to be aligned in pairs in the above-mentioned final assembled position of the retaining portion 26 and to be also aligned with a pair of through-holes 46 provided in the projecting lug 38 of the bodywork portion 14, thereby allowing the insertion of respective fixing screws 48 for fixing the flap unit to the bodywork portion 14.

In the embodiment shown in Figures 2 and 4, the retaining portion 26 is associated with an electrically-operated flap locking device. In this case, the movable tab 34 of the retaining portion 26 carries, at its free end opposite to the hinged end 36, a support structure 50 adapted to support an electrical actuator 52 intended to actuate a locking pin 54 co-operating with the fastening member 30 of the flap. The support structure 50 basically comprises a flat wall 56 substantially perpendicular to the tab 34, in which flat wall a pair of fixing holes 58 and an opening 60 for the locking pin 54 are provided.

In the embodiment shown in Figures 3 and 5, a pressure-operated retaining system for the flap 20 is provided. In this case, the movable tab 34 forms a pair of resilient retaining teeth 62 at two parallel facing edges of the opening 40, which teeth are adapted to engage under pressure the fastening member 30 of the flap 20.

As can be seen in Figures 4 to 6, the flap unit also comprises a sealing element 64 arranged between the stationary part 12 and the inlet 18. In particular, in the embodiment shown in Figure 6, the sealing element 64 is formed as a sealing cowl which is connected to the stationary part 12 by form-fit between an engaging portion 66 thereof and a fixing edge 68 of the stationary part 12 and rests sealingly on the outer cylindrical surface of the inlet 18 with a lip portion 70 thereof.

Advantageously, a pair of seals (not shown), which are both formed preferably as components separate from the flap unit and have a sealing and vibration damping function, are also provided. A first seal is intended to be mounted between the stationary part 12 and the bodywork portion 14, while the other seal is intended to be mounted along the peripheral edge of the flap 20 so as to seal the abutment zone between the flap 20 and the stationary part 12.

As can be understood from the above description, the fact that the stationary support part 12 integrally forms both the stationary hinge portion 22, which has the function of supporting and guiding the rotational movement of the flap 20, and the retaining portion 26, which has the function of retaining the flap 20 in the closed position, allows to easily and precisely assemble the flap unit 10 on the vehicle bodywork. This makes it is possible to avoid subsequent operations in order to achieve a correct centring of the flap unit on the vehicle bodywork, with a consequent reduction in the time and cost of assembly compared to the prior art.

Naturally, the principle of the invention remaining unchanged, the embodiments and the constructional details may be widely varied with respect to those described and illustrated purely by way of a non-limiting example.

## Claims

1. Flap unit (10) for a fuel tank inlet (18) of a motor vehicle, comprising:
a stationary support part (12) intended to be fixed to a bodywork portion (14) of the vehicle in the region of the inlet (18),
a flap-like movable part (20) hinged to the stationary part (12) for rotation about an axis of rotation between a closed position and an open position, in which access to the inlet (18) is prevented and allowed, respectively, and
a retaining portion (26) integrally formed by the stationary part (12) for retaining the movable part (20) in the closed position,
**characterized in that** said retaining portion (26) comprises a stationary tab (32) projecting from the stationary part (12) towards the axis of rotation of the movable part (20), and a movable tab (34) articulated (36) to the stationary tab (32) for rotation between an initial open position, in which the two tabs (32, 34) are arranged adjacent to one another, and a final assembled position, in which the two tabs (32, 34) clamp on opposite sides a projecting lug (38) of the bodywork portion (14) so as to fix the flap unit (10) to the bodywork portion (14).

2. Flap unit according to Claim 1, wherein the stationary tab (32) and the movable tab (34) are connected to one another by means of a film-type hinge portion (36).

3. Flap unit according to Claim 1 or Claim 2, wherein each of the two tabs (32, 34) has at least one through-hole (42, 44) arranged to be aligned, in the above-mentioned final assembled position, with the through-hole (42, 44) of the other tab and to be also aligned with a corresponding through-hole (46) in the bodywork portion (14), so as to allow insertion of a respective fixing screw (48) for fixing the flap unit (10) to the bodywork portion (14).

4. Flap unit according to any of the preceding claims, wherein the movable part (20) is provided with a fastening member (30) projecting from the inner side thereof and wherein said retaining portion (26) has a first opening (28) adapted to be passed through by the fastening member (30) to retain the movable part (20) in the closed position.

5. Flap unit according to Claim 4, wherein said first opening (28) is provided in the stationary tab (32) and wherein the movable tab (34) has a second opening (40) adapted to at least partly overlap over the first opening (28) when the two tabs (32, 34) are arranged in the above-mentioned final assembled position, so as to allow the fastening member (30) to pass through.

6. Flap unit according to Claim 4 or Claim 5, wherein the retaining portion (26) is provided with resilient retaining teeth (62) adapted to retain the fastening member (30) of the movable part when the movable part is in the closed position.

7. Flap unit according to Claims 5 and 6, wherein the resilient retaining teeth (62) are formed by the movable tab (34) in the region of two facing parallel edges of the second opening (40).

8. Flap unit according to any of the preceding claims, wherein the movable tab (34) carries a support structure (50) for an actuator (52) for locking/unlocking the movable part (20).

9. Flap unit according to any of the preceding claims, wherein the movable part (20) integrally forms a movable hinge portion (24) in the form of a curved arm and wherein the stationary part (12) integrally forms a stationary hinge portion (22) adapted to support and guide the movable hinge portion (24).

10. Flap unit according to any of the preceding claims, further comprising a sealing element (64) connected to the stationary part (12) and arranged to seal, when the flap unit (10) is mounted on the bodywork portion (14) of the vehicle, the space between the stationary part (12) and the inlet (18).

11. Flap unit according to Claim 10, wherein the sealing element (64) is made as a cowl and forms on the one side an engaging portion (66) adapted to engage with a fixing edge (68) of the stationary part (12) and, on the other side, a lip portion (70) adapted to sealingly rest on the outer cylindrical surface of the inlet (18) when the flap unit (10) is mounted on the bodywork portion (14) of the vehicle.

12. Flap unit according to any of the preceding claims, further comprising a pair of seals intended to be arranged, in the assembled condition on the vehicle, the one between the stationary part (12) and the bodywork portion (14) of the vehicle and the other between the movable part (20) and the stationary part (12).

13. Motor vehicle comprising a fuel tank provided with an inlet (18), **characterized in that** it comprises a flap unit (10) according to any of the preceding claims.

## Patentansprüche

1. Klappeneinheit (10) für einen Kraftstoffeinfüllstutzen (18) eines Kraftfahrzeugs, umfassend:
ein feststehendes Trägerteil (12), das zur Befestigung an einem Karosserieabschnitt (14) des Fahrzeugs im Bereich des Einfüllstutzens (18) bestimmt ist,
ein klappenartig bewegbares Teil (20), das zur Drehung um eine Rotationsachse zwischen einer geschlossenen Stellung und einer offenen Stellung gelenkig mit dem feststehenden Teil (12) verbunden ist, wobei der Zugang zum Einfüllstutzen (18) verhindert bzw. ermöglicht wird, und
einen Halteabschnitt (26), der zum Halten des bewegbaren Teils (20) in der geschlossenen Stellung durch das feststehende Teil (12) einstückig ausgebildet ist, **dadurch gekennzeichnet, dass** der Halteabschnitt (26) umfasst eine feststehende Lasche (32), die vom feststehenden Teil (12) in Richtung der Rotationsachse des bewegbaren Teils (20) hervorsteht, und eine an der feststehenden Lasche (32) angelenkte (36) bewegbare Lasche (34) zur Drehung zwischen einer offenen Ausgangsstellung, bei der die zwei Laschen (32, 34) zueinander benachbart angeordnet sind, und einer montierten Endstellung, bei der die zwei Laschen (32, 34) an gegenüberliegenden Seiten einen hervorstehenden Ansatz (38) des Karosserieabschnitts (14) einklemmen, um die Klappeneinheit (10) an dem Karosserieabschnitt (14) zu fixieren.

2. Klappeneinheit nach Anspruch 1, wobei die feststehende Lasche (32) und die bewegbare Lasche (34) mittels einem Filmscharnierabschnitt (36) miteinander verbunden sind.

3. Klappeneinheit nach Anspruch 1 oder Anspruch 2, wobei jede der zwei Laschen (32, 34) wenigstens ein Durchgangsloch (42, 44) aufweist, das so angeordnet ist, dass es in der vorstehend genannten montierten Endstellung zu dem Durchgangsloch (42, 44) der anderen Lasche ausgerichtet ist und dass es auch zu einem entsprechenden Durchgangsloch (46) in dem Karosserieabschnitt (14) ausgerichtet ist, um das Einführen einer entsprechenden Befestigungsschraube (48) zum Befestigen der Klappeneinheit (10) an dem Karosserieabschnitt (14) zu ermöglichen.

4. Klappeneinheit nach einem der vorangehenden Ansprüche, wobei das bewegbare Teil (20) mit einem von dessen Innenseite hervorstehenden Befestigungselement (30) versehen ist und wobei der Halteabschnitt (26) eine erste Öffnung (28) aufweist, die dazu ausgebildet ist, von dem Befestigungselement (30) durchsetzt zu werden, um das bewegbare Teil (20) in der geschlossenen Stellung zu halten.

5. Klappeneinheit nach Anspruch 4, wobei die erste Öffnung (28) in der feststehenden Lasche (32) vorgesehen ist und wobei die bewegbare Lasche (34) eine zweite Öffnung (40) aufweist, die dazu ausgebildet ist, über die erste Öffnung (28) zumindest teilweise zu überlappen wenn die beiden Laschen (32, 34) in der vorstehend genannten montierten Endstellung angeordnet sind, um zu ermöglichen, dass das Befestigungselement (30) es durchsetzt.

6. Klappeneinheit nach Anspruch 4 oder Anspruch 5, wobei der Halteabschnitt (26) mit elastischen Haltezähnen (62) versehen ist, die dazu ausgebildet sind, das Befestigungselement (30) des bewegbaren Teils zu halten wenn das bewegbare Teil in der geschlossenen Stellung ist.

7. Klappeneinheit nach den Ansprüchen 5 und 6, wobei die elastischen Haltezähne (62) durch die bewegbare Lasche (34) im Bereich von zwei zugewandten parallelen Kanten der zweiten Öffnung (40) gebildet sind.

8. Klappeneinheit nach einem der vorangehenden Ansprüche, wobei die bewegbare Lasche (34) eine Stützstruktur (50) für einen Aktuator (52) zum Verriegeln/Entriegeln des bewegbaren Teils (20) trägt.

9. Klappeneinheit nach einem der vorangehenden Ansprüche, wobei das bewegbare Teil (20) einen bewegbaren Scharnierabschnitt (24) in Form eines gebogenen Arms einstückig bildet und wobei das feststehende Teil (12) einen feststehenden Scharnierabschnitt (22) einstückig bildet, der dazu ausgebildet ist, den bewegbaren Scharnierabschnitt (24) zu stützen und zu führen.

10. Klappeneinheit nach einem der vorangehenden Ansprüche, weiter umfassend ein Dichtungselement (64), das mit dem feststehenden Teil (12) verbunden ist und so angebracht ist, das es, wenn die Klappeneinheit (10) an dem Karosserieabschnitt (14) des Fahrzeugs montiert ist, den Raum zwischen dem feststehenden Teil (12) und dem Einfüllstutzen (18) abdichtet.

11. Klappeneinheit nach Anspruch 10, wobei das Dichtungselement (64) als eine Haupe ausgebildet ist, und an der einen Seite einen Angriffsabschnitt (66), der dazu ausgebildet ist, an einer Befestigungskante (68) des feststehenden Teils (12) anzugreifen, und an der anderen Seite einen Lippenabschnitt (70) bildet, der dazu ausgebildet ist, an der äußeren zylindrischen Fläche des Einfüllstutzens (18) abdichtend aufzuliegen wenn die Klappeneinheit (10) an dem Karosserieabschnitt (14) des Fahrzeugs montiert ist.

12. Klappeneinheit nach einem der vorangehenden Ansprüche, weiter umfassend ein Paar Dichtungen, die so vorgesehen sind, dass im montierten Zustand an dem Fahrzeug, die eine zwischen dem feststehenden Teil (12) und dem Karosserieabschnitt (14) des Fahrzeugs und die andere zwischen dem bewegbaren Teil (20) und dem feststehenden Teil (12) angeordnet ist.

13. Kraftfahrzeug mit einem Kraftstofftank, der mit einem Einfüllstutzen (18) versehen ist, **dadurch gekennzeichnet, dass** es eine Klappeneinheit (10) nach einem der vorangehenden Ansprüche aufweist.

## Revendications

1. Unité de volet (10) pour un orifice d'entrée (18) de réservoir de carburant d'un véhicule à moteur, comprenant :
une partie de support fixe (12) prévue pour être fixée sur une partie de carrosserie (14) du véhicule dans la région de l'orifice d'entrée (18),
une partie mobile de type volet (20) articulée sur la partie fixe (12) pour rotation autour d'un axe de rotation entre une position fermée et une position ouverte, dans lesquelles l'accès à l'orifice d'entrée (18) est empêché et permis, respectivement, et
une partie de retenue (26) formée d'un seul bloc par la partie fixe (12) pour retenir la partie mobile (20) dans la position fermée,
**caractérisée en ce que** ladite partie de retenue (26) comprend une patte fixe (32) faisant saillie depuis la partie fixe (12) vers l'axe de rotation de la partie mobile (20), et une patte mobile (34) articulée (36) sur la patte fixe (32) pour rotation entre une position ouverte initiale, dans laquelle les deux pattes (32, 34) sont agencées adjacentes l'une à l'autre, et une position assemblée finale, dans laquelle les deux pattes (32, 34) pincent deux côtés opposés d'une oreille saillante (38) de la partie de carrosserie (14) de façon à fixer l'unité de volet (10) sur la partie de carrosserie (14).

2. Unité de volet selon la revendication 1, dans laquelle la patte fixe (32) et la patte mobile (34) sont reliées l'une à l'autre au moyen d'une partie d'articulation de type film (36).

3. Unité de volet selon la revendication 1 ou 2, dans laquelle chacune des deux pattes (32, 34) a au moins un trou de passage (42, 44) agencé pour être aligné, dans la position assemblée finale susmentionnée, avec le trou de passage (42, 44) de l'autre patte et pour être aussi aligné avec un trou de passage (46) correspondant dans la partie de carrosserie (14), de façon à permettre l'insertion d'une vis de fixation (48) respective pour fixer l'unité de volet (10) sur la partie de carrosserie (14).

4. Unité de volet selon l'une quelconque des revendications précédentes, dans laquelle la partie mobile (20) est pourvue d'un élément de fixation (30) faisant saillie depuis le côté intérieur de celle-ci et dans laquelle ladite partie de retenue (26) a une première ouverture (28) adaptée pour être traversée par l'élément de fixation (30) pour retenir la partie mobile (20) dans la position fermée.

5. Unité de volet selon la revendication 4, dans laquelle ladite première ouverture (28) est placée dans la patte fixe (32) et dans laquelle la patte mobile (34) a une seconde ouverture (40) adaptée pour recouvrir au moins en partie la première ouverture (28) quand les deux pattes (32, 34) sont agencées dans la position assemblée finale susmentionnée, de façon à permettre à l'élément de fixation (30) de passer à travers.

6. Unité de volet selon la revendication 4 ou 5, dans laquelle la partie de retenue (26) est pourvue de dents de retenues élastiques (62) adaptées pour retenir l'élément de fixation (30) de la partie mobile quand la partie mobile est dans la position fermée.

7. Unité de volet selon les revendications 5 et 6, dans laquelle les dents de retenues élastiques (62) sont formées par la patte mobile (34) dans la région des deux bords parallèles opposés de la seconde ouverture (40).

8. Unité de volet selon l'une quelconque des revendications précédentes, dans laquelle la patte mobile (34) supporte une structure de support (50) pour un actionneur (52) pour bloquer/débloquer la partie mobile (20).

9. Unité de volet selon l'une quelconque des revendications précédentes, dans laquelle la partie mobile (20) forme intégralement une partie d'articulation mobile (24) sous la forme d'un bras courbe et dans laquelle la partie fixe (12) forme intégralement une partie d'articulation fixe (22) adaptée pour supporter et guider la partie d'articulation mobile (24).

10. Unité de volet selon l'une quelconque des revendications précédentes, comprenant en outre un élément de fermeture étanche (64) relié à la partie fixe (12) et agencé pour fermer étanchément, quand l'unité de volet (10) est montée sur la partie de carrosserie (14) du véhicule, l'espace entre la partie fixe (12) et l'orifice d'entrée (18).

11. Unité de volet selon la revendication 10, dans laquelle l'élément de fermeture étanche (64) est fait sous la forme d'un capot et forme sur le premier côté une partie de prise (66) adaptée pour venir en prise avec un bord de fixation (68) de la partie fixe (12) et, sur l'autre côté , une partie de lèvre (70) adaptée pour reposer de manière étanche sur la surface cylindrique extérieure de l'orifice d'entrée (18) quand l'unité de volet (10) est montée sur la partie de carrosserie (14) du véhicule.

12. Unité de volet selon l'une quelconque des revendications précédentes, comprenant en outre une paire de joints prévus pour être agencés, dans l'état assemblé sur le véhicule, l'un entre la partie fixe (12) et la partie de carrosserie (14) du véhicule et l'autre entre la partie mobile (20) et la partie fixe (12).

13. Véhicule à moteur comprenant un réservoir de carburant pourvu d'un orifice d'entrée (18), **caractérisé en ce qu'**il comprend une unité de volet (10) selon l'une quelconque des revendications précédentes.
